# EUROPÄISCHE PATENTANMELDUNG

(11) **EP 1 560 448 A1**
(43) Veröffentlichungstag der Anmeldung: **03.08.2005**
(21) Anmeldenummer: 04100328.6
(22) Anmeldetag: 29.01.2004
(51) Int. Cl.: H04Q 7/32, H04M 17/00

(54) **Verfahren und System für Sprachtelefonie und/oder Datenübertragung mit Gebührenvorauszahlung**

(71) Anmelder: Swisscom Mobile AG, 3050 Bern (CH)
(72) Erfinder: Aebi, Paul, 3303 Münchringen (CH)
(74) Vertreter: Scheuzger, Beat Otto

(57) **Zusammenfassung**

Die Erfindung betrifft ein Verfahren und System zum Betrieb eines Mobilfunkgerätes (10) für Sprachtelefonie und/oder Datenübertragung mit Gebührenvorauszahlung (Prepaid). Dabei werden digitale Daten von vorausbezahlten Zugangsrechten, die einen kryptographischen Schlüssel umfassen, im Mobilfunkgerät (10) gespeichert. Digitale Nutzdaten werden im Mobilfunkgerät (10) eines Benutzers unter Verwendung des genannten kryptographischen Schlüssels verschlüsselt und/oder digital signiert und vom Mobilfunkgerät (10) an eine computerbasierte Zugangskontrolleinheit eines Telekommunikationsnetzes übertragen. Die digitalen Nutzdaten werden durch die Zugangskontrolleinheit entschlüsselt oder die digitale Signatur wird von der Zugangskontrolleinheit überprüft, wobei die Nutzdaten für eine Weiterleitung entsprechend freigegeben werden.

## Beschreibung

Die vorliegende Erfindung betrifft ein Verfahren zur Sprachtelefonie und/oder Datenübertragung mit Gebührenvorauszahlung sowie ein System zur Verwirklichung des Verfahrens. Insbesondere bezieht sich die Erfindung auf ein solches Verfahren, bei dem Mobiltelefone verwendet werden.

Es ist bekannt, Mobiltelefone mit vorausbezahlten Gebühren zu betreiben, d.h. im sogenannten Prepaid-Modus. Bei dieser Betriebsart, welche in der Regel kein Abonnement bei einem bestimmten Provider benötigt, führt der Provider ein Gebührenkonto, das durch die Anschlusskennung des Mobiltelefons und in der Regel durch weitere Kennungen, die in aller Regel verschlüsselt sind, identifiziert. Die Kennungen sind beim Provider und/oder im Chip der SIM-Karte (Subscriber Identity Module) gespeichert, die sich im Mobiltelefon befinden muss, damit dieses für Telekommunikationen betrieben werden kann. Solche zusätzlichen Kennungen sind beispielsweise Zertifikate, die die Berechtigung des Mobiltelefon-Nutzers bestätigen und die bei einem Verbindungsaufbau überprüft werden.

Aus der veröffentlichten internationalen Patentanmeldung WO 03/079713 ist ein Verfahren zum Betrieb von Mobilfunk-Endgeräten bekannt, bei dem WIM-Funktionalitäten (Wireless Identification Module) bereitgestellt und abgerechnet werden, dadurch gekennzeichnet, dass die WIM intern, d.h. im Endgerät bzw. dem dort befindlichen SIM-Identifikationsmodul, realisiert wird. Dabei wird intern jede vom Teilnehmer initiierte Signatur gezählt, und zwar von einem Ausgangszustand zurück, bis die voreingestellte Anzahl von Signaturen erreicht ist. Dann wird das Gerät bis zu einer erneuten Signaturzahl-Aufladung gesperrt.

Nachteilig an diesem Verfahren ist es, dass die Behandlung der Signatur, d.h. der digitalen Daten der Zugangsrechte, mit Ausnahme der Sperrund Freischaltungen keine Datenverarbeitung vorsieht und nur eine einfache Zählfunktion ausübt, so dass eine Führung von Nutzkonten beim Betreiber (Provider) immer noch erforderlich ist, wobei bei einem Telefongespräch stets eine Verbindung vom MSC (Mobile Switching Center) zum Provider aufgebaut und unterhalten werden muss. Bei diesem Schritt können Fehler auftreten, z.B. infolge Übermittlungsstörungen, so dass die Nutzkonten verfälscht werden können.

Die Erfindung beruht auf dem Gedanken, die Einschaltung eines Providers beim Kommunikationsablauf aufzuheben, da es sich ja um Prepaid-Systeme handelt, bei denen der Provider keinen Beitrag zur Kommunikation zu erbringen braucht.

Es ist eine Aufgabe dieser Erfindung, ein neues System und ein Verfahren für Sprachtelefonie und/oder Datenübertragung mit Gebührenvorauszahlung (Prepaid) vorzuschlagen, welche die oben genannten Nachteile des Standes der Technik nicht aufweisen. Insbesondere soll ein automatisiertes, einfaches und rationelles System und Verfahren vorgeschlagen werden, das ganz allgemein die Sicherheit der Abrechnung der Nutzdaten sowie auch die Zuverlässigkeit der Behandlung der digitalen Daten der Zugangsrechte verbessert und zudem beschleunigt.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass digitale Daten von vorausbezahlten Zugangsrechten, die einen kryptographischen Schlüssel umfassen, gespeichert werden, dass digitale Nutzdaten im Kommunikations-Endgerät eines Mobilfunkteilnehmers unter Verwendung des genannten kryptographischen Schlüssels verschlüsselt und/oder digital signiert werden, dass die verschlüsselten oder digital signierten Nutzdaten vom Kommunikationsendgerät an eine computerbasierte Zugangskontrolleinheit eines Telekommunikationsnetzes übertragen werden, und dass die digitalen Nutzdaten durch die Zugangskontrolleinheit entschlüsselt werden oder die digitale Signatur von der Zugangskontrolleinheit überprüft wird, wobei eine Weiterleitung freigegeben wird. Insbesondere können die Nutzdaten auch beispielsweise Prepaid-Kontodaten enthalten oder aus ihnen bestehen. Diese Ausführungsvariante hat u.a. den Vorteil, dass keine zentrale Administration der vom Benutzer erworbenen Kommunikationsrechte (z.B. Prepaid Guthaben) notwendig ist. Damit fallen z.B. zentral geführte Datenbanken mit den den Benutzern zugeordnet abgespeicherten Guthaben weg. Die vorausbezahlten digitalen Daten der Zugangsrechte im Kommunikationsendgerät können entsprechend der Weiterleitung der Nutzungsdaten gelöscht und/oder modifiziert werden. Bei einer Modifikation kann z.B. ein Geldbetragswert in den digitalen Daten der vorausbezahlten Zugangsrechten vermindert werden.

In einer Ausführungsvariante werden die vorausbezahlten digitalen Daten der Zugangsrechte auf dem SIM-Modul (Subscriber Identification Module) des Kommunikations-Endgerätes gespeichert. Diese Ausführungsvariante hat u.a. den Vorteil, dass der Benutzer sein Guthaben durch SIM-Tausch von einem Gerät auf ein anderes transferieren kann. Im Weiteren kann damit auch den Forderungen der Gesetzgeber nach Registrierung des Benutzers entsprochen werden.

In einer anderen Ausführungsvariante umfasst das System und/oder das Verfahren eine Weiterleitung der entschlüsselten digitalen Nutzdaten durch die Zugangskontrolleinheit über das Telekommunikationsnetz an den gewählten Bestimmungsort bei Entschlüsselung der digitalen Nutzdaten bzw. erfolgreicher Überprüfung der digitalen Signatur. Diese Ausführungsvariante hat u.a. den Vorteil, dass Verbindungen auf alle Sprach- und/oder Datenübertragungsgeräte in öffentlichen Netzwerken möglich sind.

In einer Ausführungsvariante sind die genannten digitalen Daten der Zugangsrechte temporäre Daten, deren Schlüssel löschbar ist. Diese Ausführungsvariante hat u.a. die gleichen Vorteile wie die vorhergehenden.

In einer wieder anderen Ausführungsvariante werden die genannten digitalen Daten der Zugangsrechte und die genannten Nutzdaten getrennt gespeichert, wobei sie über den genannten Schlüssel miteinander in Beziehung gebracht werden. Diese Ausführungsvariante hat u.a. den Vorteil, dass die digitalen Daten der Zugangsrechte zu einem beliebigen Zeitpunkt vor dem Entstehen der Nutzdaten erworben und gespeichert werden können.

In einer Ausführungsvariante werden die genannten digitalen Daten der Zugangsrechte und die genannten Nutzdaten unter Zuhilfenahme des genannten Schlüssels gemeinsam gespeichert. Diese Ausführungsvariante hat u.a. den Vorteil, dass das beschriebene Verfahren auch in Systemen die keine SIM-Karte o.ä. kennen zur Anwendung kommen kann.

An dieser Stelle soll festgehalten werden, dass sich die vorliegende Erfindung neben dem erfindungsgemässen Verfahren auch auf ein System zur Ausführung dieses Verfahrens bezieht. Ferner beschränkt es sich nicht auf das genannte System und Verfahren, sondern bezieht sich ebenso auf ein Computerprogrammprodukt zur Realisierung des erfindungsgemässen Verfahrens.

Nachfolgend werden Ausführungsvarianten der vorliegenden Erfindung anhand von Beispielen beschrieben. Die Beispiele der Ausführungen werden durch folgende beigelegte Figuren illustriert:
Figur 1 zeigt schematisch ein Prepaid System des Standes der Technik.
Figur 2 illustriert schematisch ein System zur Ausführung des erfindungsgemässen Verfahrens.

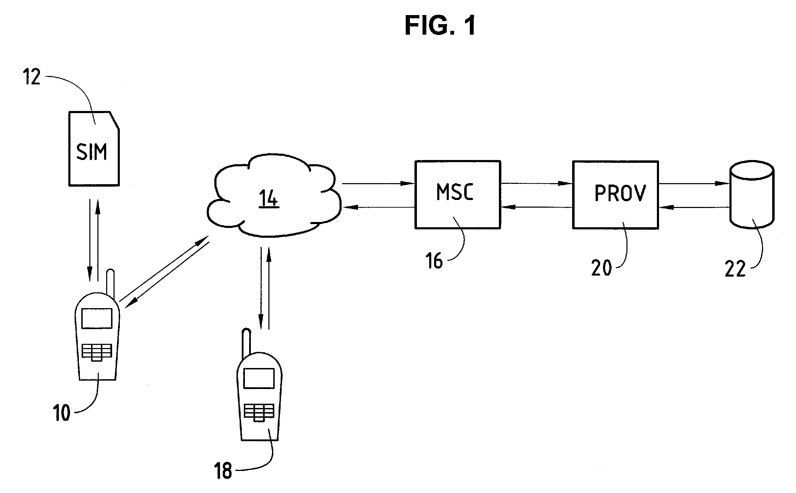

Figur 1 illustriert schematisch eine Architektur des Standes der Technik. In diesem Ausführungsbeispiel ist ein Mobiltelefongerät 10 dargestellt, in das eine Prepaid-SIM-Karte 12 einsetzbar ist. Über Funk lässt sich das Telefongerät 10 mit dem Mobilfunknetzwerk 14 verbinden. Das Kommunikationsnetz 14 umfasst beispielsweise ein GSM- (Global System for Mobile communication) oder ein UMTS-Netz (Universal Mobile Telephone System), oder ein satellitenbasiertes Mobilfunknetz, und/oder ein oder mehrere Festnetze, beispielsweise das öffentlich geschaltete Telefonnetz, das weltweite Internet oder ein geeignetes LAN (Local Area Network) oder WAN (Wide Area Network). Insbesondere kann es auch ISDN- und XDSL-Verbindungen umfassen. Dieses Netzwerk steht wiederum in Datenaustausch-Verbindung mit dem MSC (Mobile Switching Center) 16. Das Netzwerk und das MSC sind nach dem GSM-Standard (Global System for Mobile Communication) aufgebaut. Der gewünschte Telefonteilnehmer, der mit dem Mobiltelefon 10 angewählt werden soll, ist mit 18 bezeichnet. Bei diesem Gerät kann es sich um ein Festtelefon, ein Mobiltelefon oder um eine beliebige andere Telekommunikations-Einheit handeln (z.B. auch ein Fax).

Mit dem MSC steht ein Provider 20 (PROV) mit einer Provider-Datenbank 22 in Verbindung, da ja für die Gebühren der zu führenden Prepaid-Konten eine entsprechende Kontenstelle vorhanden sein muss. Diese befindet sich in der Datenbank 22. Die Daten des in Frage stehenden Prepaid-Kontos werden in der Datenbank 22 gespeichert und dort beim Aktivieren des Teilnehmerkontos nachgeführt.

Der Ablauf des Verbindungsaufbaus, der auch die Prüfung der Berechtigung (Signatur) und die Kontenüberwachung und -führung umfasst, ist allgemein bekannt und soll nicht in Einzelheiten beschrieben werden.

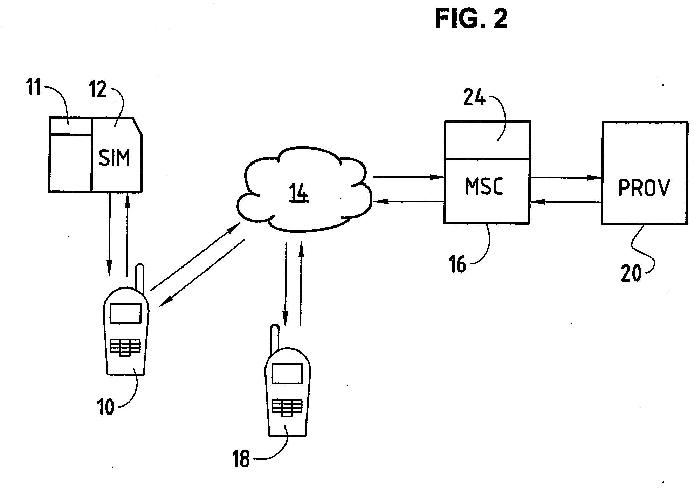

Fig. 2 zeigt nun schematisch den Aufbau eines erfindungsgemässen Systems. Elemente und Bestandteile, die in Fig. 1 und 2 die gleichen bzw. einander ähnlich sind, tragen die gleichen Bezugszeichen.

Auf der SIM-Karte 12 befindet sich zusätzlich ein Daten- und Zertifikationsbereich 11, der die digitalen Daten der Zugangsrechte (wie z.B. DRM-Daten (DRM: Digital Rights Management)) in verschlüsselter Form, bevorzugt in digital verschlüsselter Form, enthält. Dabei ist dieser Bereich 11 vorzugsweise physikalisch vom übrigen Speicherfeld des SIM-Moduls 12 getrennt. Beim Aufladen des SIM-Chips, beispielsweise von einer für diesen Zweck eingerichteten Aufladekarte oder aber von einer Bankkreditkarte, wird dem Teilnehmer zusätzlich vom Provider 20 über den Server 16 ein Zertifikat gesendet, welches im Zertifikatsbereich 11 des SIM-Identikationsmoduls zusammen mit verschlüsselten Kontendaten gespeichert wird. Das SIM-Modul erteilt dem Mobiltelefon das Recht, Gespräche unter bestimmten Nutzungsbedingungen (z.B. Ziel, Dauer) mit dem Zertifikat zu versehen, d.h. zu verschlüsseln und/oder signieren. Die Nutzdaten können z.B. speicherbar sein (beispielsweise SMS (Short Message Service), MMS (Multimedia Message Service), MP3 der Moving Picture Experts Group (MPEG) etc.) und/oder nicht speicherbar, wie z.B. ein Datastream und/oder Voice Data etc.

Beim Telefonieren mit dem Gerät 10 werden die Tondaten und/oder Nutzdaten, die mit dem Zertifikat, d.h. den digitalen Daten der Zugangsrechte, verschlüsselt und/oder signiert und/oder andersartig geeignet kombiniert sind, an das MSC 16 und weiter an das Trust-Center 24 übertragen. Das Trust-Center kann Bestandteil des MSC 16 sein und stellt die Zugangskontrolleinheit des erfindungsgemässen Systems dar. Das Trust-Center 24, das bei der vorliegenden Erfindung für den Aufbau und den Betrieb einer Telekommunikationsverbindung keine Providerverbindung benötigt, entschlüsselt die empfangenen Daten und/oder überprüft Signatur, aber überprüft nicht irgendwelche digitale Daten von Zugangsrechten (wie z.B. den Kontostand etc.). Dann gibt das Trust-Center 24, sofern das Signatur gültig ist, die Nutzdaten (z.B. Voice Data, SMS, MMS, MP3 etc.) zur Übermittlung an den zweiten Teilnehmer 18 frei. Während der Übermittlung werden die anfallenden Gebühren, welche wie üblich eine Funktion mehrerer Parameter (Dauer, Entfernung, Tageszeit, Art des Gerätes 18) sind, vom Daten-Token 11 abgebucht. Wenn der vorausgezahlte Betrag, dessen Daten auf dem SIM-Modul gespeichert sind, aufgebraucht ist, wird das zugehörige Zertifikat annulliert, und die Übertragung wird abgebrochen, eventuell nach einer entsprechenden Warnung. Die Warnungsdaten sind ebenfalls im Datenbereich 11 gespeichert und werden von dort abgerufen.

Vor erneutem Aufladen des Datenspeichers mit Gebühren und Zertifikaten ist keine weitere Übermittlung oder aber nur bestimmte, begrenzte Übermittlungen (Notruf, Aufladenummern) möglich.

Aus Obigem geht hervor, dass die Erfindung eine Möglichkeit schafft, das Telefonkonto bei Prepaid-Betrieb direkt auf dem Mobiltelefon zu führen und den Umweg über ein Provider-Konto zu vermeiden. Es ist dem Fachmann klar, dass der Erfindungsgedanke und das darauf beruhende, hierin beanspruchte Verfahren auch mit anderen Bauelementen und Systemeinheiten verwirklicht werden kann.

## Patentansprüche

1. Verfahren zum Betrieb eines Kommunikations-Endgeräts (10), insbesondere eines Mobilfunkgerätes für Sprachtelefonie und/oder Datenübertragung mit Gebührenvorauszahlung, **dadurch gekennzeichnet,**
**dass** digitale Daten von vorausbezahlten Zugangsrechten, die einen kryptographischen Schlüssel umfassen, gespeichert werden,
**dass** digitale Nutzdaten im Kommunikations-Endgerät eines Mobilfunkteilnehmers unter Verwendung des genannten kryptographischen Schlüssels verschlüsselt und/oder digital signiert werden,
**dass** die verschlüsselten oder digital signierten Nutzdaten vom Kommunikationsendgerät an eine computerbasierte Zugangskontrolleinheit eines Telekommunikationsnetzes übertragen werden, und
**dass** die digitalen Nutzdaten durch die Zugangskontrolleinheit entschlüsselt werden oder die digitale Signatur von der Zugangskontrolleinheit überprüft wird, wobei eine Weiterleitung freigegeben wird.

2. Verfahren nach Anspruch 1, **dadurch gekennzeichnet, dass** die vorausbezahlten digitalen Daten der Zugangsrechte im Kommunikationsendgerät entsprechend der Weiterleitung der Nutzungsdaten gelöscht und/oder modifiziert werden.

3. Verfahren nach Anspruch 2, **dadurch gekennzeichnet, dass** ein Geldbetragswert in den digitalen Daten der vorausbezahlten Zugangsrechten vermindert wird.

4. Verfahren nach einem der Ansprüche 1 bis 3, **dadurch gekennzeichnet, dass** die vorausbezahlten digitalen Daten der Zugangsrechte auf dem SIM-Modul (12) des Kommunikations-Endgerätes (10) gespeichert werden.

5. Verfahren nach einem der Ansprüche 1 bis 3, weiterhin umfassend die Weiterleitung der entschlüsselten digitalen Nutzdaten durch die Zugangskontrolleinheit über das Telekommunikationsnetz an den gewählten Bestimmungsort bei Entschlüsselung der digitalen Nutzdaten bzw. erfolgreicher Überprüfung der digitalen Signatur.

6. Verfahren nach mindestens einem der vorstehenden Ansprüche, **dadurch gekennzeichnet, dass** die genannten digitalen Daten der Zugangsrechte temporäre Daten sind, deren Schlüssel löschbar ist.

7. Verfahren nach mindestens einem der vorstehenden Ansprüche, **dadurch gekennzeichnet, dass** die genannten digitalen Daten der Zugangsrechte und die genannten Nutzdaten getrennt gespeichert werden, wobei sie über den genannten Schlüssel miteinander in Beziehung gebracht werden.

8. Verfahren nach mindestens einem der vorstehenden Ansprüche 1 bis 6, **dadurch gekennzeichnet, dass** die genannten digitalen Daten der Zugangsrechte und die genannten Nutzdaten unter Zuhilfenahme des genannten Schlüssels gemeinsam gespeichert werden.

9. System zur Ausführung des Verfahrens nach mindestens einem der Ansprüche 1 bis 8, mit einem Kommunikations-Endgerät (10), welches ein SIM-Modul (12) aufweist, mit einem MSC (Mobile Switching Center), das mit dem Endgerät (10) über ein Kommunikationsnetz (14) verbindbar ist, wobei ein Trust-Center (24) zur Überprüfung digitaler Zugangsrechte mit dem MSC verbunden oder in dieses integriert ist, und wobei digital verschlüsselte Zugangsrechts-Daten im SIM-Modul gespeichert sind,
**dadurch gekennzeichnet, dass** im SIM-Modul (12) ein Speichermodul (11) zum Speichern von Nutzdaten eingerichtet ist.

10. System nach Anspruch 9, **dadurch gekennzeichnet, dass** das Datenspeichermodul (11) des SIM-Moduls zum Speichern von verschlüsselten oder digital signierten Nutzdaten eingerichtet ist.

11. System nach Anspruch 9 oder 10, **dadurch gekennzeichnet, dass** die Nutzdaten Prepaid-Kontodaten enthalten oder aus ihnen bestehen.

## Geänderte Patentansprüche

### Geänderte Patentansprüche gemäss Regel 86(2) EPÜ.

**1.** Verfahren zum Betrieb eines Kommunikations-Endgeräts (10), wie eines Mobilfunkgerätes, für Sprachtelefonie und/oder Datenübertragung mit Gebührenvorauszahlung, bei dem digitale Nutzdaten eines Mobilfunkteilnehmers in einem Kommunikations-Endgerät des Teilnehmers verschlüsselt und/oder digital signiert werden und die verschlüsselten und/oder digital signierten Nutzdaten vom genannten Kommunikations-Endgerät über ein Telekommunikationsnetz übertragen werden, **dadurch gekennzeichnet,**
**dass** digitale Daten von vorausbezahlten Zugangsrechten, die einen kryptographischen Schlüssel umfassen, von einem Dienstanbieter an das genannte Kommunikations-Endgerät übermittelt und dort in einem gesonderten Speichermodul gespeichert werden,
**dass** die genannten verschlüsselten und/oder digital signierten Nutzdaten vom Kommunikations-Endgerät an eine vom Dienstanbieter unabhängige Zugangskontrolleinheit des Telekommunikationsnetzes übertragen werden, in der die digitalen Nutzdaten entschlüsselt werden und/oder die digitale Signatur überprüft wird, worauf eine Weiterleitung freigegeben wird.

**2.** Verfahren nach Anspruch 1, **dadurch gekennzeichnet, dass** die vorausbezahlten digitalen Daten der Zugangsrechte im Kommunikationsendgerät entsprechend der Weiterleitung der Nutzungsdaten gelöscht und/oder modifiziert werden.

**3.** Verfahren nach Anspruch 2, **dadurch gekennzeichnet, dass** ein Geldbetragswert in den digitalen Daten der vorausbezahlten Zugangsrechten vermindert wird.

**4.** Verfahren nach einem der Ansprüche 1 bis 3, **dadurch gekennzeichnet, dass** die vorausbezahlten digitalen Daten der Zugangsrechte auf dem SIM-Modul (12) des Kommunikations-Endgerätes (10) gespeichert werden.

**5.** Verfahren nach einem der Ansprüche 1 bis 3, weiterhin umfassend die Weiterleitung der entschlüsselten digitalen Nutzdaten durch die Zugangskontrolleinheit über das Telekommunikationsnetz an den gewählten Bestimmungsort bei Entschlüsselung der digitalen Nutzdaten bzw. erfolgreicher Überprüfung der digitalen Signatur.

**6.** Verfahren nach mindestens einem der vorstehenden Ansprüche, **dadurch gekennzeichnet, dass** die genannten digitalen Daten der Zugangsrechte temporäre Daten sind, deren Schlüssel löschbar ist.

**7.** Verfahren nach mindestens einem der vorstehenden Ansprüche, **dadurch gekennzeichnet, dass** die genannten digitalen Daten der Zugangsrechte und die genannten Nutzdaten getrennt gespeichert werden, wobei sie über den genannten Schlüssel miteinander in Beziehung gebracht werden.

**8.** Verfahren nach mindestens einem der vorstehenden Ansprüche 1 bis 6, **dadurch gekennzeichnet, dass** die genannten digitalen Daten der Zugangsrechte und die genannten Nutzdaten unter Zuhilfenahme des genannten Schlüssels gemeinsam gespeichert werden.

**9.** System zur Ausführung des Verfahrens nach mindestens einem der Ansprüche 1 bis 8, mit einem Kommunikations-Endgerät (10), welches ein SIM-Modul (12) aufweist; mit einem MSC (Mobile Switching Center) (16), das mit dem Endgerät (10) über ein Kommunikationsnetz (14) verbindbar ist; und mit einem Trust-Center (24) zur Überprüfung digitaler Zugangsrechte, und wobei digital verschlüsselte Zugangsrechts-Daten im SIM-Modul gespeichert sind, **dadurch gekennzeichnet,**
**dass** das genannte Trust-Center (24) mit dem MSC (16) verbunden oder in dieses integriert ist, wobei das MSC (16) und das Trust-Center (24) unabhängig von einem Dienstanbieter vorgesehen und eingerichtet sind, und
**dass** im SIM-Modul (12) ein separates Speichermodul (11) zum Speichern von Nutzdaten eingerichtet ist.

**10.** System nach Anspruch 9, **dadurch gekennzeichnet, dass** das Datenspeichermodul (11) des SIM-Moduls zum Speichern von verschlüsselten oder digital signierten Nutzdaten eingerichtet ist.

**11.** System nach Anspruch 9 oder 10, **dadurch gekennzeichnet, dass** die Nutzdaten Prepaid-Kontodaten enthalten oder aus ihnen bestehen.
